# EUROPÄISCHE PATENTSCHRIFT

(11) **EP 2 758 197 B1**
(45) Veröffentlichungstag und Bekanntmachung des Hinweises auf die Patenterteilung: **10.05.2017**
(21) Anmeldenummer: 12758853.1
(22) Anmeldetag: 12.09.2012
(51) Int. Cl.: B23B 29/14, B23B 27/08, B23B 27/04, B23B 29/04

(54) **STECHPLATTE UND KLEMMHALTER MIT VIER-PUNKTANLAGEN**
INSERT AND CLAMP HOLDER WITH FOUR LOCATING POINTS
PLAQUETTE DE COUPE PORTE ET PINCE A QUATRE POINTS DE LOCALISATION

(30) Priorität: 19.09.2011 DE 102011053760
(43) Veröffentlichungstag der Anmeldung: 30.07.2014
(73) Patentinhaber: Walter AG, 72072 Tübingen (DE)
(72) Erfinder: ZEEB, Rudi, 72070 Tübingen (DE); BANDURA, Christian, 76185 Karlsruhe (DE)
(74) Vertreter: WSL Patentanwälte Partnerschaft mbB
(86) Internationale Anmeldenummer: PCT/EP2012/067788
(87) Internationale Veröffentlichungsnummer: WO 2013/041420

(56) Entgegenhaltungen:
- EP-A1- 1 205 273
- EP-A2- 2 082 820

## Beschreibung

Die vorliegende Erfindung bezieht sich auf einen Klemmhalter für Schneideinsätze, mit einem starren Halteteil und einem gegenüber dem starren Halteteil elastisch bewegbaren Klemmfinger, wobei Halteteil und Klemmfinger gegenüber liegende Seiten einer im Wesentlichen U-förmigen Aussparung für die Aufnahme eines Schneideinsatzes definieren, und wobei im Inneren der Aussparung ein Anschlag für die Begrenzung der Einschubtiefe des Schneideinsatzes in die Aussparung vorgesehen ist. Die dem Klemmfinger gegenüber liegende Seite hat dabei mindestens zwei Anlagepunkte im Abstand voneinander oder eine entsprechend ausgedehnte Anlagefläche, die mindestens zwei solche Anlagepunkte umfasst, während der Klemmfinger einen Anlagepunkt bzw. eine weniger ausgedehnte Anlagefläche für den Eingriff mit einem Schneideinsatz aufweist.

Entsprechende Klemmhalter für Schneideinsätze, insbesondere für sogenannte Stechplatten, sind seit langem bekannt. Diese Klemmhalter sind im Allgemeinen schmale Platten oder plattenförmige Elemente, wobei die Dicke dieser Platten bzw. plattenförmigen Elemente geringer ist als die Länge einer Hauptschneidkante einer entsprechenden Stechplatte. Diese Hauptschneidkante wird wiederum gebildet durch den Übergang bzw. die Ecke zwischen zwei Randflächen, welche (neben gegebenenfalls weiteren Randflächen) die Seitenflächen der Schneidplatte bzw. des Schneideinsatzes miteinander verbinden. Im Bereich der Schneidkante ist die Schneidplatte etwas verdickt.

Dabei weist eine Stirnseite eines solchen Klemmhalters eine Aussparung auf, in welcher die Stechplatte aufgenommen und durch den Klemmfinger festgehalten wird. Die Schneidkante der Stechplatte bildet den am weitesten nach vorn ragenden Teil des aus Klemmhalter und Stechplatte bestehenden Werkzeuges und wird beispielsweise einem rotierenden, rotationssymmetrischen Werkstück zugeführt, um eine Nut in den Umfang des Werkstückes einzustechen oder einen Abschnitt des Werkstückes abzustechen. Dabei dringt der Schneideinsatz mit seiner Schneidkante voran in das Werkstück ein und der in Form einer schmalen Platte oder Klinge ausgebildete Klemmhalter, dessen Dicke ebenfalls geringer ist als die Länge der Schneidkante, kann nachfolgend in die bereits von der Stechplatte erzeugte Nut eindringen.

Entsprechende Klemmhalter können aber auch an rotierenden Werkzeugen, zum Beispiel einem Scheibenfräser, vorgesehen sein, wobei in einem solchen Fall die Aussparungen radial entlang des Umfangs einer drehbaren Scheibe vorgesehen sind und entsprechende Schlitze, die sich ebenfalls im Wesentlichen von der Peripherie der Platte radial nach innen erstrecken, geeignete Klemmfinger und demgegenüber starre Abschnitte gebildet werden.

Da die Schneidkante einer solchen Stechplatte bzw. eines entsprechenden Schneideinsatzes jeweils als erster und einziger Teil mit dem Werkstück in Kontakt kommt, muss der die Schneidkante aufweisende Abschnitt des Schneideinsatzes von dem Klemmhalter ein gewisses Stück weit hervorstehen. Während der Bearbeitung wirken je nach Art des Werkstückes, der Vorschubgeschwindigkeit des Werkzeuges und der Bearbeitungsgeschwindigkeit hohe Kräfte auf den Schneideinsatz ein, die, da die Schneidkante etwas von dem Klemmhalter hervorsteht, auch ein gewisses Drehmoment auf den Schneideinsatz ausüben, wobei das effektive Drehmoment definiert wird durch die auf die Schneidkante bzw. Spanfläche wirkende Kraft und den Hebel, der durch die Verbindung von Schneidkante und dem der Schneidkante gegenüber liegenden, nächstgelegenen Auflagepunkt des Schneideinsatzes auf dem Klemmhalter definiert wird.

Herkömmliche Klemmhalter weisen dabei im Allgemeinen drei Anlagepunkte auf, nämlich zwei Anlagepunkte auf der Seite, welche der Seite, auf welcher die Schneidkante ausgebildet ist, gegenüber liegt, die im Allgemeinen dem starren Halteteil zugeordnet ist, und einen Anlagepunkt auf der Seite der Schneidkante, die im Allgemeinen durch ein Ende des Klemmfingers gebildet wird, wobei dieser dritte Anlagepunkt im Allgemeinen gegenüber einer Verbindungslinie zwischen den ersten und zweiten Anlagepunkten liegt. Der Begriff "Anlagepunkt" umfasst dabei auch mehr oder weniger ausgedehnte Anlageflächen. Im Rahmen der vorliegenden Anmeldung wird eine Anlagefläche als ein "Anlagepunkt" angesehen, wenn ihre maximale Ausdehnung weniger als 20 % der maximalen Ausdehnung eines Schneideinsatzes bzw. der U-förmigen Aussparung beträgt.

Zusätzlich ist im Inneren der Aussparung noch ein Anschlag vorgesehen, welcher die Einschubtiefe des Schneideinsatzes begrenzt, beispielsweise indem ein rückwärtiges, von der Schneidkante abgewandtes Ende des Schneideinsatzes an einen in der Nähe des Grundes der U-förmigen Aussparung angeordneten Anschlag anstößt. In einigen Fällen ist der Anschlag auch am Klemmfinger ausgebildet und kann insbesondere auch durch das freie Ende des Klemmfingers gebildet sein, wobei dann am Schneideinsatz ein entsprechender stufenförmiger Vorsprung zwischen Schneidkante und dem hinteren, in der U-förmigen Aussparung aufgenommenen Abschnitt vorgesehen sein muss.

Während diese bekannte, sogenannte Dreipunktanlage zwar im Allgemeinen eine eindeutige stabile Lage des Schneideinsatzes definiert, kann es dennoch unter schwierigen Arbeitsbedingungen, d.h. bei relativ starken auf die Schneidkante wirkenden Kräften dazu Arbeitsbedingungen, d.h. bei relativ starken auf die Schneidkante wirkenden Kräften dazu kommen, dass der Schneideinsatz in seinem Sitz entgegen der durch den Klemmfinger über den dritten Anlagepunkt ausgeübten Kraft verkippt wird. Dabei kann der Schneideinsatz sich unter Umständen vollständig aus seinem Sitz lösen, wird aber zumindest kurzzeitig seine Position verändern, sodass sich die Bedingungen an der Schneidkante ändern, die geschnittenen Flächen möglicherweise unsauber werden oder noch weiter erhöhte Kräfte auftreten, die zu Vibrationen und entsprechend frühzeitigem Verschleiß und auch zum Herausreißen des Schneideinsatzes aus seinem Sitz oder auch zu einem Bruch des Schneideinsatzes führen können.

Die EP 1 205 273 A1 betrifft ein spanabhebendes Werkzeug mit einem Klemmhalter gemäß dem Oberbegriff von Anspruch 1 und einem Schneideinsatz gemäß dem Oberbegriff von Anspruch 7. Der Schneideinsatz wird durch einen elastischen Klemmarm, der die obere Anlagefläche der Ausnehmung bildet, in der Ausnehmung festgeklemmt. Erfindungsgemäß sind die untere Anlagefläche des Schneideinsatzes und die untere Anlagefläche der Ausnehmung zumindest teilweise kreisbogenförmig ausgeführt. Der Radius des Kreisbogens der Anlagefläche ist gegenüber dem Kreisbogen der Anlagefläche geringfügig kleiner ausgeführt. Die obere Anlagefläche des Schneideinsatzes und die Anlagefläche des Klemmarmes sind so aufeinander abgestimmt, dass der gegenseitige Kontakt in einem Bereich erfolgt, der von der Symmetrielinie des Schneideinsatzes in Richtung auf die Schneidkante zu beabstandet ist.

In der EP 2 082 820 A2 wird ein Zerspanungswerkzeug beschrieben, das wenigstens eine Schneidplatte und wenigstens einen Schneidplattenhalter aufweist, welcher wenigstens eine Ausnehmung zur Aufnahme der Schneidplatte aufweist. Jeweilige zur Anlage von Randabschnitten der Schneidplatte vorgesehene Anlageflächen der Ausnehmung sind zumindest teilweise mit einer sich abwechselnde Erhebungen und Vertiefungen aufweisenden Verzahnung versehen. Die Ausnehmung weist eine Öffnung zum Einführen der Schneidplatte in die Ausnehmung auf. Der Schneidplattenhalter weist einen von der Ausnehmung beabstandeten, geschlossenen Schlitz auf, welcher an derjenigen Seite der Ausnehmung angeordnet ist, an der bei bestimmungsgemäßer Verwendung des Zerspanungswerkzeugs die höchste Schnittkraft auftritt. Der Schlitz erstreckt sich an der der Öffnung der Ausnehmung entgegengesetzten Seite nicht über die Längserstreckung der Schneidplatte hinaus. Ein sich zwischen der Ausnehmung und dem Schlitz befindlicher Steg des Schneidplattenhalters weist eine derartige Dicke auf, dass er elastisch verformbar ist. Die Schneidplatte an ihrem dem Schlitz zugewandten Randabschnitt weist eine Aussparung auf, die sich an einer zu dem Schlitz benachbarten Stelle befindet.

Gegenüber diesem Stand der Technik liegt der vorliegenden Erfindung die Aufgabe zu Grunde, einen entsprechenden Klemmhalter für Schneideinsätze, ebenso wie auch einen passenden Schneideinsatz zu schaffen, welche in der Lage sind, größeren Schneidkräften zu widerstehen, eine stabile und sichere Position des Schneideinsatzes im Klemmhalter auch unter schwierigen Bedingungen, d.h. bei großen Schneidkräften, gewährleisten und während einer Werkstückbearbeitung Vibrationen und damit auch einen vorzeitigen Verschleiß des Schneideinsatzes zu reduzieren.

Diese Aufgabe wird durch einen Klemmalter nach Anspruch 1 und einen Schneideinsatz nach Anspruch 7 gelöst. Dies erzielt man dadurch, dass der Anschlag eine Anschlagfläche aufweist, welche gegenüber der Einschubrichtung des Schneideinsatzes nicht etwa senkrecht oder unter einem sehr großen Winkel angeordnet ist, sondern nur relativ geringfügig abgewinkelt ist und sich unter einem Winkel zwischen 15 und 50° gegenüber der Einschubrichtung erstreckt. Effektiv führt eine solche Anschlagfläche, welche gleichzeitig auch auf der den ersten und zweiten Anlagepunkten gegenüber liegenden Seite der U-förmigen Aussparung angeordnet ist, zu einer keilförmigen Verjüngung der U-förmigen Aussparung, die auch als effektiver Anschlag zur Begrenzung der Einschubtiefe eines Schneideinsatzes wirkt.

Aufgrund der relativ geringen Abwinkelung und der Anordnung auf der den ersten und zweiten Anlagepunkten gegenüber liegenden Seite wirkt dieser Anschlag gleichzeitig aber auch als vierter Anlagepunkt neben dem durch den Klemmfinger bereitgestellten dritten Anlagepunkt. Mit anderen Worten, der Schneideinsatz wird dadurch auf beiden Seiten durch je zwei beabstandete Anlagepunkte gehalten und kann damit im Vergleich zu herkömmlichen Klemmhaltern wesentlich größeren Drehmomenten widerstehen, wie sie durch auf die Schneidkante wirkende Schneidkräfte hervorgerufen werden.

Wegen der leichten Abwinkelung der Anlagefläche wird aber dennoch eine Überbestimmung der Position des Schneideinsatzes vermieden, da beim Einführen des Schneideinsatzes in die U-förmige Aussparung (wobei sich versteht, dass der Schneideinsatz dem Verlauf der Seiten der U-förmigen Aussparung angepasste obere bzw. untere Seiten aufweist) der Schneideinsatz zunächst nur mit den ersten und zweiten und gegebenenfalls auch mit dem dritten Anlagepunkt in Kontakt tritt, während der vierte Anlagepunkt gleichzeitig als Anschlag zur Begrenzung der Einschubtiefe ausgebildet ist und dadurch erst bei Erreichen der Endposition des Schneideinsatzes mit diesem in Kontakt tritt. Wegen des relativ flachen Winkels, um welchen der Anschlagpunkt gegenüber der zugehörigen Seite abgewinkelt ist, kann dieser Anlagepunkt gleichzeitig als echtes Widerlager gegenüber Drehmomenten wirken, die durch die auftretende Schneidkraft und den effektiven Hebel-Schneidkante-erster-Anflagepunkt hervorgerufen werden.

Der dritte Anlagepunkt hat einen maximalen Abstand zu dem ersten Anlagepunkt und nimmt daher problemlos entsprechende Drehmomente auf.

In einer Ausführungsform ist vorgesehen, dass der Klemmfinger, welcher die der Seite mit der ersten und zweiten Anlagepunkten gegenüber liegende Seite mit dem dritten Anlagepunkt bildet, von dem auf der gleichen Seite vorgesehenen vierten Anlagepunkt durch einen die relative Beweglichkeit des Klemmfingers bewirkenden Schlitz getrennt ist.

Der vierte Anlagepunkt, der gleichzeitig Anschlag ist, ist damit nicht Teil des beweglichen Klemmfingers, sondern dem starren Halteteil zugeordnet, sodass der gleichzeitig als Anschlag dienende vierte Anlagepunkt seiner Funktion als (unbewegliche) Einschubbegrenzung mit einer entsprechenden Positioniergenauigkeit gut gerecht werden kann.

Dementsprechend ist bei einer solchen Ausführungsform die Seite mit zwei Anlagepunkten dem starren Halteteil zugeordnet.

Weiterhin ist der Anschlag als eine relativ ausgedehnte Anschlagfläche bzw. Anlagefläche ausgebildet, was ebenfalls zur Verbesserung der Positioniergenauigkeit beiträgt.

In einer Ausführungsform der Erfindung ist eine der beiden gegenüber liegenden Seiten der Aussparung konkav und die andere Seite konvex ausgebildet. Dabei verlaufen die konkaven und die konvexen Seiten zumindest annähernd parallel und dementsprechend müssen auch die zugehörigen Seiten eines Schneideinsatzes entsprechend konkav und konvex ausgebildet sein, um passend in die U-förmige Aussparung eingesetzt werden zu können. Eine solche gekrümmte Ausgestaltung der U-förmigen Aussparung kann zur Vergrößerung der Auszugskräfte beitragen, welche unter Umständen auf den Schneideinsatz wirken. Außerdem ermöglicht diese gekrümmte Ausgestaltung eine günstigere Ausnutzung des Materials des Klemmhalters, wenn man übermäßige Überstände nach oben oder unten bezüglich der U-förmigen Aussparung vermeiden will.

Im Fall einer solchen gekrümmten Ausbildung der U-förmigen Aussparung kann die Einschubrichtung, gegenüber welcher die Anlagefläche abgewinkelt ist, gegebenenfalls bezüglich einer Tangente an den gekrümmten Verlauf am Übergang zu der Abwinkelung definiert werden.

Effektiv bildet dabei die Anschlagfläche, unabhängig davon, ob die Aussparung geradlinig oder gekrümmt verläuft, eine keilförmige Verjüngung der U-förmigen Aussparung an deren innerem Endabschnitt, die gleichzeitig die Einschubtiefe des Schneideinsatzes begrenzt und auch eine Bewegung des Schneideinsatzendes nach oben und unten blockiert. Im Übrigen hat die U-förmige Aussparung eine im Wesentlichen konstante Breite und sie ist der Form des Schneideinsatzes angepasst.

Der zugehörige Schneideinsatz ist analog zu der Aussparung ausgebildet und weist einen Schneideinsatzkörper auf, der eine Ober- und Unterseite hat, welche für den Eingriff mit entsprechenden Seiten der U-förmigen Aussparung eines Klemmhalters ausgebildet sind, eine Schneidkante an einem Ende der Oberseite an deren Übergang zu einer Stirnseite, welche Ober- und Unterseite miteinander verbindet, und einer Anschlagfläche an dem der Schneidkante entgegengesetzt liegenden Ende, wobei die Unterseite zwei Anlagepunkte für den Kontakt mit zwei entsprechenden Anlagepunkten der U-förmigen Aussparung eines Klemmhalters aufweist und einen Anlagepunkt auf der gegenüber liegenden Seite, wobei ein Anschlag an dem von der Schneidkante entfernt gelegenen Ende des Schneideinsatzes vorgesehen ist, wobei die Seiten des Schneideinsatzes analog zu den Seiten der Aussparung konkav und konvex ausgebildet sind, wobei die Seite mit zwei Anlagepunkten konkav und die Seite mit einem Anlagepunkt konvex ausgebildet ist, der Anschlag an einem von der Schneidkante des Schneideinsatzes entfernten Ende eine Anschlagfläche aufweist und die Anschlagfläche gegenüber dem gekrümmten Verlauf der zugehörigen Seite um einen Betrag von 15 bis 50° abgewinkelt ist, so dass der Anschlag gleichzeitig als Anlagepunkt wirkt, so dass der Schneideinsatz vier Anlagepunkte aufweist. Auch hier wird diese Wirkung als Anlagepunkt durch eine leichte Abwinkelung der Anlagefläche gegenüber der Einschubrichtung bzw. gegenüber der zugehörigen Oberseite des Schneideinsatzes hervorgerufen.

Die miteinander in Kontakt tretenden Seiten des Schneideinsatzes und der U-förmigen Aussparung können auch eine leicht positive oder negative Keilform definieren. Dabei wird die Keilform als "positiv" bezeichnet, wenn die Öffnung der U-förmigen Aussparung breiter ist als der weiter innen liegende Teil ist, und wird im umgekehrten Fall als "negativ" bezeichnet.

Die Form des Schneideinsatzes ist analog zu der Form der U-förmigen Aussparung, d.h. der Schneideinsatz weist gegebenenfalls konkave obere und untere Seiten auf, die zumindest annähernd parallel verlaufen und die Anlagepunkte des Schneideinsatzes, welche mit den entsprechenden Anlagepunkten des Klemmhalters in Kontakt kommen, sind in gleicher Weise verteilt wie bei dem Klemmhalter.

Um definierte, voneinander getrennte erste und zweite Anlagepunkte zu erhalten, können die einander zugeordneten Flächen des Schneideinsatzes und des Klemmhalters, welche die beiden Anlagepunkte aufweisen, geringfügig unterschiedlich ausgestaltet sein, d.h. zwischen den beiden Anlagepunkten kann eine der beiden Seiten gegenüber der anderen etwas zurückspringend ausgebildet sein. Auf diese Weise wird sichergestellt, dass eine Seite des Schneideinsatzes sich an zwei eindeutig voneinander beabstandet gelegenen Punkten gegenüber der zugeordneten Seite des Klemmhalters abstützt.

Beispielsweise kann die Unterseite des Schneideinsatzes zwischen den beiden Anlagepunkten einen rückspringenden Abschnitt aufweisen, wobei dieser rückspringende Abschnitt aber auch an dem Klemmhalter vorgesehen sein könnte.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 einen erfindungsgemäßen Klemmhalter,
Figur 2 einen entsprechenden Schneideinsatz,
Figur 3 einen in einem Klemmhalter aufgenommenen Schneideinsatz und
Figuren 4a, b das Einsetzen einer Stechplatte in einen Klemmhalter oder das entsprechende Herausnehmen mit Hilfe eines Werkzeuges.

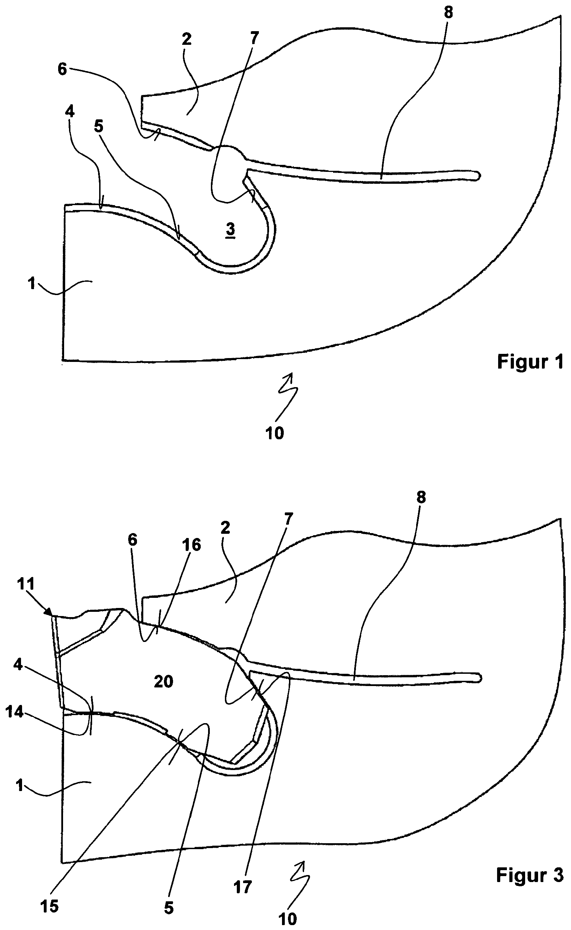

Man erkennt in Figur 1 den insgesamt mit 10 dargestellten Klemmhalter in Form einer schmalen Klinge, von der hier nur der relevante Ausschnitt dargestellt ist, der gegebenenfalls einen Schneideinsatz aufnimmt. Der Klemmhalter, hat, wie gesagt, näherungsweise die Form einer dünnen länglichen Platte bzw. Klinge oder auch einer drehbaren Scheibe, wobei die Dicke des Klemmhalters typischerweise in der Größenordnung von 1 bis 10 mm liegt, während die Breite bzw. Höhe, die in Figur 1 in vertikaler Richtung zu messen wäre, typischerweise zwischen 10 und 50 mm beträgt. Die Länge (zu messen in horizontaler Richtung) liegt typischerweise im Bereich von 50 bis 150 mm. Insbesondere kann ein hinterer Abschnitt dieser Klinge des Klemmhalters 10 auch gegenüber dem vorderen, die Aussparung 3 aufweisenden Abschnitt deutlich verdickt sein.

Wie man sieht, weisen der Klemmhalter eine hier unten dargestellten starren Abschnitt 1 und einen demgegenüber elastisch beweglichen Klemmfinger 2 auf. Zwischen dem Klemmfinger 2 und dem starren Abschnitt 1 wird eine annähernd U-förmige Aussparung 3 definiert, wobei in diesem Fall die Flanken dieser U-förmigen Aussparung auf der einen Seite konkav und auf der anderen Seite konvex gekrümmt sind. Im vorliegenden Fall ist die untere Seite der U-förmigen Aussparung 3, welche Anlagepunkte 4 und 5 aufweist, konvex gekrümmt und die obere Seite, welche im Wesentlichen durch den Klemmfinger 2 mit dem Anlagepunkt 6 und auch durch den gleichzeitig als Anschlag dienenden Anlagepunkt 7 definiert wird, ist im Wesentlichen konkav ausgebildet, wobei auch der Schlitz 8 in dieser konkaven Oberseite mündet.

Die Starrheit des Abschnittes 1 und die demgegenüber relative Beweglichkeit des Klemmfingers 2 wird im Wesentlichen durch das oberhalb und unterhalb des Endes des Schlitzes 8 verbleibende Material des Klemmhalters 10 gewährleistet.

Im Allgemeinen sind derartige Klemmhalter aus Werkzeugstahl hergestellt.

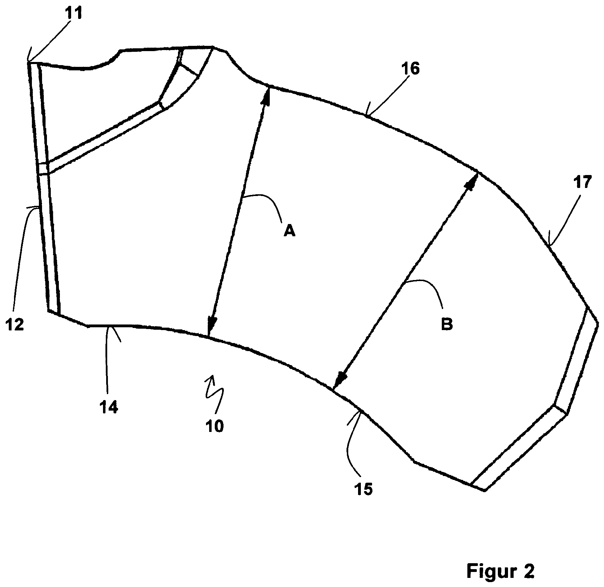

In Figur 2 ist ein zugehöriger Schneideinsatz in Form einer Stechplatte 20 dargestellt, der ebenfalls aus einem schmalen, plattenförmigen Teil besteht, dessen oberes linkes Ende geringfügig verdickt ist und am Übergang von der Oberseite zu einer Stirnseite eine Schneidkante 11 aufweist. Die Oberseite weist neben der an dem vorderen Ende vorgesehenen Schneidkante 11 in einem weiter zurückgelegenen Abschnitt einen Anlagepunkt 16 auf sowie einen weiteren Anlagepunkt 17 in der Nähe des hinteren, inneren Endes des Schneideinsatzes 20. Der Anlagepunkt 16 liegt gegenüber einer Verbindungslinie der Anlagepunkte 14, 15 auf der Unterseite des Schneideinsatzes 20. Anders gesprochen mündet die kürzeste Verbindung von dem Anlagepunkt 16 zu einer die Punkte 14 und 15 verbindenden Linie zwischen diesen beiden Punkten 14 und 15.

Die sich zwischen äquivalenten Punkten der Oberseite und der Unterseite des Schneideinsatzes 20 erstreckenden Doppelpfeile A und B deuten an, dass der Schneideinsatz 20 eine leicht negative Keilform hat, da die Breite des Schneideinsatzes im Bereich des näher zur Öffnung der Aussparung gelegenen Doppelpfeiles A etwas geringer ist als im Bereich des Doppelpfeiles B. Analog gilt dies auch für die U-förmige Aussparung 3. Ein entsprechender Keilwinkel den man zwischen Tangenten an äquivalenten Punkte der Seiten der Aussparung oder des Schneieinsatzes messen könnte, läge im Bereich von 1 bis 5°. Dennoch reicht die Beweglichkeit des Klemmfingers 2 aus, um den Schneideinsatz 20 mit seinem geringfügig breiteren Ende voran in das entsprechend aufgespreizte offene Ende der U-förmigen Aussparung 3 einschieben zu können. (äquivalente Punkte sind Punkte auf den gegenüberliegenden Seiten deren Verbindungslinie mit der jeweiligen Tangente spiegelbildlich denselben Winkel einschließt).

Bezüglich des Einführens eines Schneideinsatzes bzw einer Schneidplatte in die Aussparung ist zu berücksichtigen, dass die Oberseite und die Unterseite des Schneideinsatzes, ebenso wie die entsprechenden Seiten der U-förmigen Aussparung 3 im Schnitt (in den Figuren senkrecht zur Papierebene) im Allgemeinen ein keilförmiges oder bogenförmiges Profil haben, um dem Schneideinsatz auch quer zu seiner Einschubrichtung in die Aussparung 3 sicheren Halt zu geben, was einen Einschub seitlich (d. h. in den Figuren senkrecht zur Papierebene) in die Aussparung ausschließt.

Gegenüber der konvex gekrümmten Oberseite, an welcher der dritte Anlagepunkt 16 vorgesehen ist, weist der hintere Abschnitt der Oberseite einen abgewinkelten, ebenen Abschnitt auf, welcher den Anlagepunkt 17 und gleichzeitig auch die Anschlagfläche des Schneideinsatzes 20 zur Begrenzung seiner Einschubtiefe aufweist.

Gegenüber einer Tangente an die gekrümmte Oberseite unmittelbar vor dem Abknicken der Anschlagfläche 17, ist diese Fläche 17 um einen Winkel von 20 bis 25° abgeknickt, wobei dieser Winkel selbstverständlich auch andere Werte, typischerweise im Bereich von 15 bis 50° annehmen kann. Dabei ist zu bedenken, dass ein sehr kleiner Winkel die Genauigkeit der Begrenzung der Einschubtiefe einschränkt, während ein zu großer Winkel dazu führen könnte, dass die Fläche 17 ihre Wirkung als vierter Anlagepunkt verlieren könnte und bei Auftreten entsprechender Drehmomente, die durch im Wesentlichen vertikal von oben auf die Schneidkante 11 bzw. die zugehörige Spanfläche wirkenden Kräfte über den Hebel von dort zum Anlagepunkt 14 wirken, keinen hinreichenden Widerstand entgegensetzen würde.

Winkel im Bereich zwischen 15 und 50° sollten jedoch beide Funktionen hinreichend gut erfüllen, wobei kleinere Winkel zu Lasten der Positioniergenauigkeit beim Anschlag gehen, während größere Winkel die Funktion des Widerlagers des vierten Anlagepunktes eher einschränken.

In Figur 3 erkennt man den in der U-förmigen Aussparung 3 montierten Schneideinsatz 20. In Figur 3 ist außerdem eine Variante eines Schneideinsatzes dargestellt, dessen Unterseite einen rückspringenden Abschnitt aufweist, sodass die beiden getrennten ersten und zweitten Anlagepunkte 14, 15 eindeutig definiert und voneinander beabstandet sind. Auch die oberen Anlagepunkte 16 und 17 sind eindeutig voneinander getrennt und beabstandet, da einer dieser Punkte, nämlich der Punkt 16, am Klemmfinger vorgesehen ist und der Punkt 17 überhaupt erst nach entsprechend weitem Einschieben des Schneideinsatzes bis an den Endanschlag mit dem Anschlag 7 in der U-förmigen Aussparung 3 in Kontakt kommt.

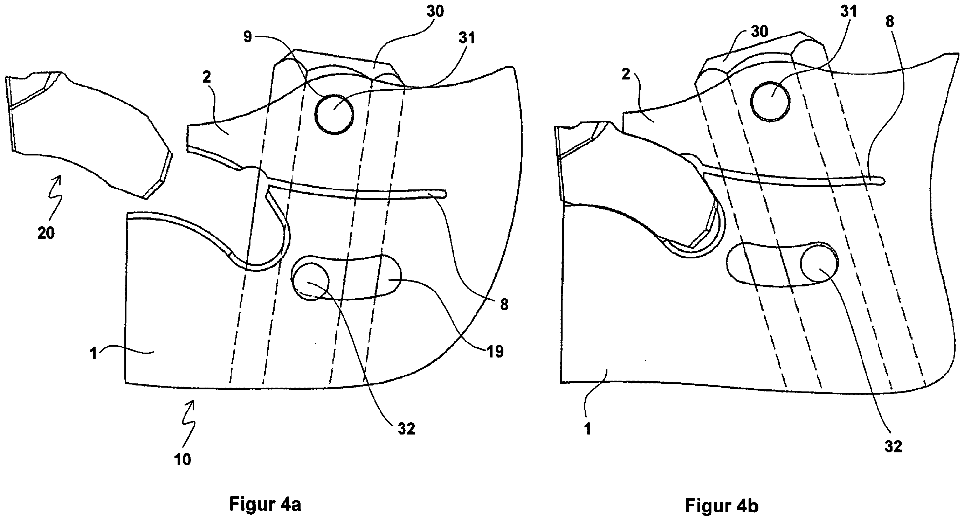

Figur 4 zeigt zusätzlich noch die Montage des Schneideinsatzes in der entsprechenden Aussparung mit Hilfe eines geeigneten Werkzeuges. Da der Schneideinsatz, d.h. der Abstand zwischen Ober- und Unterseite des Schneideinsatzes gegenüber der Breite der U-förmigen Aussparung 3 mit etwas Übermaß hergestellt ist und da wegen der Menge an Material, die oberhalb des Schlitzes 8 an dem Klemmfinger 2 verbleibt, sehr große elastische Rückstellkräfte auf den Klemmfinger wirken, ist im Allgemeinen ein Werkzeug mit Hebelübersetzung erforderlich, um die U-förmige Aussparung 3 hinreichend weit zu öffnen, und den Schneideinsatz festklemmen zu können, zumal dann, wenn, wie oben beschrieben Schneideinsatz und U-förmige Aussparung eine leicht negative Keilform definieren.

Zu diesem Zweck ist in dem Klemmfinger oberhalb des Schlitzes 8 eine Bohrung 9 vorgesehen, die einen entsprechenden Stift 31 eines Werkzeuges 30 aufnehmen kann. Im unteren, starren Halteteil ist ein gekrümmtes Langloch 19 vorgesehen, dessen Krümmungsmittelpunkt allerdings geringfügig neben dem Mittelpunkt der Bohrung 9 liegt, was dazu führt, dass eine Mittellinie des Langlochs 19 einen variierenden Abstand zum Zentrum des Lochs 9 hat. Das Werkzeug 30 in Form eines Hebels, an dessen einem Ende zwei Stifte 31, 32 in einem Abstand angeordnet sind, der die gleichzeitige Aufnahme der Stifte in der Bohrung 9 und an zumindest einem Ende des Langloches 19 ermöglicht, wird mit seinen beiden Stiften in der Bohrung und dem Langloch platziert. Ein Verschwenken des Hebels derart, dass der Stift 32 an das andere Ende des Langlochs 19 gleitet, welches einen kleineren Abstand zum Zentrum der Bohrung 9 hat, drückt Klemmfinger 2 und starres Halteteil 1 etwas auseinander, sodass in diesem, in Figur 4 links dargestellten Zustand der Schneideinsatz in die U-förmige Aussparung eingesetzt werden kann.

Nach dem erneuten Verschwenken des Hebels 30 in die Ausgangsposition, wie sie in Figur 4 rechts dargestellt ist, kann das Werkzeug mit seinen beiden Stiften 31, 32 aus der Bohrung 9 und dem Langloch 19 entnommen werden und der Schneideinsatz ist damit festgeklemmt. Während des vorherigen Einschiebens des Schneideinsatzes in die U-förmige Aussparung 3 erreicht irgendwann die Anschlagfläche 17 den Anschlag 7 und begrenzt damit die weitere Einschubtiefe des Schneideinsatzes in die U-förmige Aussparung, da die betreffenden Anschlagflächen 7, 17 gegenüber der Einschubrichtung abgewinkelt sind und außerdem die Anschlagfläche 7 an dem starren Halteteil 1 angeordnet ist.

Der erfindungsgemäße Klemmhalter erzeugt eine sehr feste und sichere Klemmung des Schneideinsatzes 20 in dem Klemmhalter 10.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

## Patentansprüche

1. Klemmhalter (10) für Schneideinsätze (20), mit einem starren Halteteil (1) und einem gegenüber dem starren Halteteil (1) elastisch bewegbaren Klemmfinger (2), wobei Halteteil (1) und Klemmfinger (2) gegenüberliegende Seiten einer im Wesentlichen U-förmigen Aussparung (3) für die Aufnahme eines Schneideinsatzes (20) definieren, wobei eine dieser beiden Seiten erste und zweite voneinander beabstandete Anlagepunkte (4, 5) für eine Seite eines Schneideinsatzes (20) und die gegenüberliegende Seite einen dritten Anlagepunkt (6) aufweist und wobei im Inneren der Aussparung (3) ein Anschlag (7) für die Begrenzung der Einschubtiefe des Schneideinsatzes (20) in die Aussparung (3) vorgesehen ist, **dadurch gekennzeichnet, dass** der den dritten Anlagepunkt (6) aufweisenden Seite des Schneideinsatzes (20) zusätzlich der Anschlag (7) zugeordnet ist, wobei die Seite mit zwei Anlagepunkten (4, 5) konvex und die Seite mit einem Anlagepunkt (6) konkav ausgebildet ist, wobei der Anschlag (7) eine von dem konkaven Krümmungsverlauf der zugehörigen Seite abweichende in das Innere der Aussparung (3) gerichtete Abwinkelung aufweist und wobei die Abwinkelung gegenüber einer Tangente an den gekrümmten Verlauf im Abwinkelungspunkt zwischen etwa 15 und 50° beträgt, so dass der Anschlag (7) gleichzeitig als weiterer, vierter seitlicher Anlagepunkt gegenüber den ersten und zweiten Anlagepunkten (4, 5) und als Anschlag für die Begrenzung der Einschubtiefe des Schneideinsatzes (20) wirkt, so dass der Klemmhalter vier Anlagepunkte (4, 5, 6, 7) aufweist.

2. Klemmhalter (10) für Schneideinsätze (20) nach Anspruch 1, **dadurch gekennzeichnet, dass** der bewegliche Klemmfinger (2) einen vorderen Abschnitt einer der beiden gegenüberliegenden Seiten mit einem Anlagepunkt bildet, und von dem auf der gleichen Seite vorgesehenen Anlagepunkt durch einen die relative Beweglichkeit des Klemmfingers (2) bewirkenden Schlitz (8) getrennt ist.

3. Klemmhalter (10) für Schneideinsätze (20) nach Anspruch 1 oder 2, **dadurch gekennzeichnet, dass** die Seite mit zwei Anlagepunkten (4, 5) dem starren Halteteil (1) zugeordnet ist und die Seite mit einem Anlagepunkt (6) und dem Anschlag (7) die dem Klemmfinger (2) zugeordnete Seite ist.

4. Klemmhalter (10) für Schneideinsätze (20) nach einem der vorstehenden Ansprüche, **dadurch gekennzeichnet, dass** der Anschlag (7) als Anschlag- bzw. Anlagefläche ausgebildet ist.

5. Klemmhalter (10) für Schneideinsätze (20) nach einem der Ansprüche 1, 2 oder 4, **dadurch gekennzeichnet, dass** der Anschlag (7) Teil des starren Halteteiles (1) ist.

6. Klemmhalter (10) für Schneideinsätze (20) nach einem der vorstehenden Ansprüche, **dadurch gekennzeichnet, dass** die Anschlagfläche mit der gegenüber liegenden konvexen Seite eine keilförmige Verjüngung der im Wesentlichen U-förmigen Aussparung (3) definiert.

7. Schneideinsatz (20) zum Nuten oder Abstechen mit einer Oberseite und einer Unterseite, die für den Eingriff jeweils mit gegenüber liegenden Seiten einer U-förmigen Aussparung (3) ausgebildet sind, zwischen denen der Schneideinsatz (20) eingeklemmt wird, **dadurch gekennzeichnet, dass** eine dieser Seiten erste und zweite beabstandete Anlagepunkte (14, 15) und die andere der beiden Seiten einen dritten Anlagepunkt (16) und einen davon beabstandeten, die Einschubtiefe des Schneideinsatzes (20) in die Aussparung (3) begrenzenden Anschlag (17) aufweist, wobei die Seiten des Schneideinsatzes (20) analog zu den Seiten der Aussparung (3) konkav und konvex ausgebildet sind, **dadurch gekennzeichnet dass** die Seite mit zwei Anlagepunkten (14, 15) konkav und die Seite mit einem Anlagepunkt (16) konvex ausgebildet ist, der Anschlag (17) an einem von der Schneidkante (11) des Schneideinsatzes (20) entfernten Ende eine Anschlagfläche aufweist und die Anschlagfläche gegenüber dem gekrümmten Verlauf der zugehörigen Seite um einen Betrag von 15 bis 50° abgewinkelt ist, so dass der Anschlag (17) gleichzeitig auch als weiterer, vierter seitlicher Anlagepunkt fungiert, so dass der Schneideinsatz vier Anlagepunkte (14, 15, 16, 17) aufweist.

8. Schneideinsatz (20) nach Anspruch 7, **dadurch gekennzeichnet, dass** die Seite zwischen den ersten und zweiten Anlagepunkten (14, 15) einen rückspringenden Abschnitt aufweist, um einen direkten Kontakt der betreffenden Seite mit dem Klemmhalter (10) zwischen den ersten und zweiten Anlagepunkten (14, 15) zu vermeiden.

9. Kombination aus Klemmhalter (10) nach einem der Ansprüche 1 bis 6 und Schneideinsatz (20) nach einem der Ansprüche 7 oder 8, **dadurch gekennzeichnet, dass** der erste und der zweite Anlagepunkt (4, 5; 14, 15) durch einen rückspringenden Abschnitt einer der einander gegenüberliegenden Anlageseiten des Schneideinsatzes (20) und der Aussparung (3) zwischen den Anlagepunkten (4, 5; 14, 15) gebildet werden um einen Kontakt von Schneideinsatz (20) und Klemmhalter (10) zwischen den beiden Anlagepunkten (4, 5; 14, 15) zu vermeiden.

## Claims

1. Clamping holder (10) for cutting inserts (20), with a rigid holding part (1) and a clamping finger (2), which is resiliently movable relative to the rigid holding part (1), wherein the holding part (1) and clamping finger (2) define opposing sides of a substantially U-shaped recess (3) to receive a cutting insert (20), wherein one of these two sides has first and second contact points (4, 5) that are spaced apart from one another for one side of a cutting insert (20) and the opposing side has a third contact point (6) and wherein a stop (7) is provided in the interior of the recess (3) to limit the insertion depth of the cutting insert (20) into the recess (3), **characterised in that** the stop (7) is additionally assigned to the side of the cutting insert (20) having the third contact point (6), wherein the side with two contact points (4, 5) is convex and the side with one contact point (6) is concave, wherein the stop (7) has an angling directed into the interior of the recess (3) and differing from the concave course of curvature of the associated side, and wherein the angling relative to a tangent to the curved course at the angling point is between about 15 and 50º, such that the recess (7) simultaneously acts as a further, fourth lateral contact point relative to the first and second contact points (4, 5) and as a stop to limit the insertion depth of the cutting insert (20), such that the clamping holder comprises four contact points (4, 5, 6, 7).

2. Clamping holder (10) for cutting inserts (20) according to claim 1, **characterised in that** the movable clamping finger (2) forms a front portion of one of the two opposing sides with a contact point, and is separated from the contact point provided on the same side by a slot (8) bringing about the relative mobility of the clamping finger (2).

3. Clamping holder (10) for cutting inserts (20) according to claim 1 or 2, **characterised in that** the side with two contact points (4, 5) is assigned to the rigid holding part (1) and the side with a contact point (6) and the stop (7) is the side assigned to the clamping finger (2).

4. Clamping holder (10) for cutting inserts (20) according to any one of the preceding claims, **characterised in that** the stop (7) is configured as a stop face or contact face.

5. Clamping holder (10) for cutting inserts (20) according to any one of claims 1, 2 or 4, **characterised in that** the stop (7) is part of the rigid holding part (1).

6. Clamping holder (10) for cutting inserts (20) according to any of the preceding claims, **characterised in that** the stop face defines a wedge-shaped tapering of the substantially U-shaped recess (3) with the opposing convex side.

7. Cutting insert (20) for grooving or cutting off with an upper side and a lower side, which are configured to engage, in each case, with opposing sides of a U-shaped recess (3), between which the cutting insert (20) is clamped, **characterised in that** one of these sides has first and second spaced-apart contact points (14, 15) and the other of the two sides has a third contact point (16) and a stop (17), which is spaced apart therefrom and limits the insertion depth of the cutting insert (20) into the recess (3), wherein the sides of the cutting insert (20) are concave and convex analogously to the sides of the recess (3), **characterised in that** the side with two contact points (14, 15) is concave and the side with one contact point (16) is convex, the stop (17) has a stop face at an end remote from the cutting edge (11) of the cutting insert (20), and the stop face is angled relative to the curved course of the associated side by an amount of 15 to 50º, such that the stop (17) simultaneously also acts as a further, fourth lateral contact point, such that the cutting insert comprises four contact points (14, 15, 16, 17).

8. Cutting insert (20) according to claim7, **characterised in that** the side between the first and second contact points (14, 15) has a setback portion in order to avoid direct contact of the relevant side with the clamping holder (10) between the first and second contact points (14, 15).

9. Combination of a clamping holder (10) according to any one of claims 1 to 6 and a cutting insert (20) according to any one of claims 7 or 8, **characterised in that** the first and the second contact point (4, 5; 14, 15) are formed by a setback portion of one of the mutually opposing contact sides of the cutting insert (20) and of the recess (3) between the contact points (4, 5; 14, 15) in order to avoid contact of the cutting insert (20) and clamping holder (10) between the two contact points (4, 5; 14, 15).

## Revendications

1. Support de serrage (10) pour des inserts de coupe (20), comprenant une pièce de support (1) rigide et un doigt de serrage (2) élastiquement mobile par rapport à la pièce de support (1) rigide, la pièce de support (1) et le doigt de serrage (2) définissant des côtés opposés d'un évidement (3) présentant une forme sensiblement en U pour la réception d'un insert de coupe (20), un des deux côtés comprenant des premiers et deuxièmes points d'appui (4, 5), espacés l'un de l'autre, pour un côté d'un insert de coupe (20) et le côté opposé comprenant un troisième point d'appui (6), et une butée (7) étant prévue à l'intérieur de l'évidement (3) pour limiter la profondeur d'insertion de l'insert de coupe (20) dans l'évidement (3), **caractérisé en ce que** la butée (7) est associée, de manière supplémentaire, au côté de l'insert de coupe (20) qui comprend le troisième point d'appui (6), le côté comprenant deux points d'appui (4, 5) présentant une forme convexe et le côté comprenant un point d'appui (6) présentant une forme concave, la butée (7) comprenant une partie en angle qui ne suit pas la forme concave du côté respectif et qui est orientée vers l'intérieur de l'évidement (3), et la partie en angle enfermant avec une tangente, au point de départ de la partie en angle, un angle entre environ 15 et 50 degrés, si bien que la butée (7) sert en même temps comme point d'appui latéral supplémentaire, le quatrième point d'appui, par rapport aux premier et deuxième points d'appui (4, 5) et comme butée pour limiter la profondeur d'insertion de l'insert de coupe (20), si bien que le support de serrage comprend quatre points d'appui (4, 5, 6, 7).

2. Support de serrage (10) pour des inserts de coupe (20) selon la revendication 1, **caractérisé en ce que** le doigt de serrage (2) mobile forme une partie avant d'un des deux côtés en regard avec un point d'appui et est séparé du point d'appui situé sur le même côté par une fente (8) assurant la mobilité relative du doigt de serrage (2).

3. Support de serrage (10) pour des inserts de coupe (20) selon la revendication 1 ou 2, **caractérisé en ce que** le côté avec deux points d'appui (4, 5) est attribué à la pièce de support (1) rigide et **en ce que** le côté avec un point d'appui (6) et la butée (7) est le côté attribué au doigt de serrage (2).

4. Support de serrage (10) pour des inserts de coupe (20) selon l'une des revendications précédentes, **caractérisé en ce que** la butée (7) est conformée comme surface de butée ou d'appui.

5. Support de serrage (10) pour des inserts de coupe (20) selon l'une des revendications 1, 2 ou 4, **caractérisé en ce que** la butée fait partie de la pièce de support (1) rigide.

6. Support de serrage (10) pour des inserts de coupe (20) selon l'une des revendications précédentes, **caractérisé en ce que** la surface de butée définit avec le côté convexe en regard un rétrécissement en forme de coin de l'évidement (3) ayant sensiblement la forme d'un U.

7. Insert de coupe (20) pour former des rainures ou pour découper, comprenant une face supérieure et une face inférieure formées pour s'engager sur des côtés en regard d'un évidement (3) ayant la forme d'un U entre lesquels l'insert de coupe (20) est serré, **caractérisé en ce qu'**un de ces côtés comprend des premiers et deuxièmes points d'appui espacés (14, 15) et **en ce que** l'autre de ces côtés comprend un troisième point d'appui (16) et une butée (17) espacée de ce dernier et limitant la profondeur d'insertion de l'insert de coupe (20) dans l'évidement (3), les côtés de l'insert de coupe (20) étant formés concave et convexe de manière analogue aux côtés de l'évidement (3), **caractérisé en ce que** le côté avec deux points d'appui (14, 15) est concave et le côté avec un point d'appui (16) est convexe, la butée (17) comprend, à une extrémité éloignée du bord de coupe (11) de l'insert de coupe (20), une surface de butée, et la surface de butée forme un angle de 15 à 50 degrés avec la courbure du côté respectif, si bien que la butée (17) fonctionne en même temps aussi comme point d'appui supplémentaire, le quatrième point d'appui, si bien que l'insert de coupe comprend quatre points d'appui (4, 5, 6, 7).

8. Insert de coupe (20) selon la revendication 7, **caractérisé en ce que** le côté entre les premiers et deuxièmes points d'appui (14, 15) comprend une zone en retrait pour éviter un contact direct du côté concerné avec le support de serrage (10) entre les premiers et deuxièmes points d'appui (14, 15).

9. Combinaison d'un support de serrage (10) selon l'une des revendications 1 à 6 et d'un insert de coupe (20) selon l'une des revendications 7 ou 8, **caractérisée en ce que** le premier et le deuxième points d'appui (4, 5 ; 14, 15) sont formés par une zone en retrait d'un des côtés d'appui en regard de l'insert de coupe (20) et l'évidement (3) entre les points d'appui (4, 5 ; 14, 15), afin d'éviter un contact entre l'insert de coupe (20) et le support de serrage (10) entre les deux points d'appui (4, 5 ; 14, 15).
